# EUROPEAN PATENT SPECIFICATION

(11) **EP 2 273 664 B1**
(45) Date of publication and mention of the grant of the patent: **27.02.2013**
(21) Application number: 09008844.4
(22) Date of filing: 07.07.2009
(51) Int. Cl.: H02M 3/158, H02M 7/493, H02M 1/32

(54) **PWM control device and driving method thereof**
PWM-Steuerungsgerät und Verfahren dafür
Dispositif de commande PWM et son procédé de commande

(43) Date of publication of application: 12.01.2011
(73) Proprietor: Giga-Byte Technology Co., Ltd., Taipei-Hsien (TW)
(72) Inventor: Liao, Tse-Hsine, Taipei-Hsien (TW); Hung, Ju-Yi, Taipei-Hsien (TW)
(74) Representative: Schwerbrock, Florian

(56) References cited:
- JP-A- 9 275 699
- JP-A- 59 149 791
- US-A- 5 450 309
- US-A1- 2006 227 579

## Description

### BACKGROUND

### 1. Technical Field

The present invention relates to a control device and, more particularly, to a pulse width modulation (PWM) control device.

### 2. Description of the Related Art

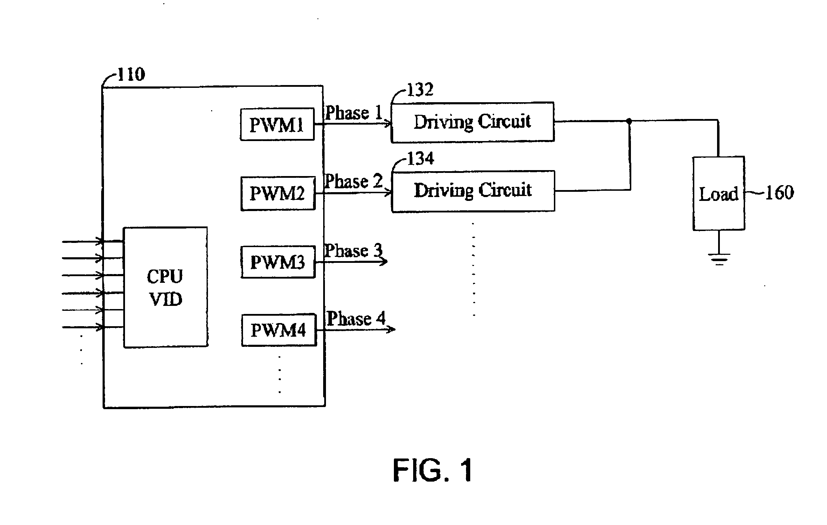

FIG. 1 shows a structure of a conventional PWM control circuit, The PWM control circuit comprises a PWM device 110, driving circuits 132 and 134. Generally speaking, when changing the total output phase number, the PWM device 110 (or PWM integrated circuit) will increase or decrease the total output phase number gradually. In addition, the PWM device 110 will select some of the phases as output phases according to a fixed sequence. When the load capacity is heavy, most of the driving circuits will output current to the load 160; when the load capacity is light, only some of the driving circuits will be selected to output current, and the selected driving circuits is predetermined. Thus, those predetermined driving circuits will always output current to the load 160. For example, when outputting PWM signals of four phases, the control device 110 only can change to output PWM signals of three phases and then change to output PWM signals of two phases; when outputting PWM signals of two phases, the control device 110 only can change to output PWM signals of three phases and then change to output PWM signals of four phases. When the control device 110 determines to output PWM signals of two phases, the phases 1 and 2 will be selected as the output phases; when the control device 110 determines to output PWM signals of three phases, the phase 1 through phase 3 will be selected as the output phases. In addition, when the control device 110 determines to output PWM signals of four phases, the phase 1 through phase 4 will be selected as the output phases. Thus, no matter the load capacity is heavy or light, the phases 1 and 2 will always be utilized. In other words, the driving circuits 132 and 134 corresponding to the phases 1 and 2 will always output current to the load 160. Thus, the failure rate of the driving circuits 132 and 134 will be higher than that of the driving circuits corresponding to the phases 3 and 4 (not shown). Further, when one of the driving circuits is damaged, the PWM device 110 only can enable the driving circuits which precede the damaged driving circuit. For example, when the driving circuit corresponding to the phase 3 or the driving circuit corresponding to the phase 4 Is damaged, the PWM device 110 only can enable the driving circuits corresponding to the phases 1 through 2 or the driving circuits corresponding to the phases 1 through 3. Thus, the failure rate of the enabled driving circuits will also be increased.

Document US 5450309 describes the redundant operation of PWM-controlled inverters, but their enabling and disabling sequence is pre-defined.

Therefore, a PWM control device which can change the selecting sequence of the output phases is needed.

### BRIEF SUMMARY

The present invention relates to a PWM control device. The PWM control device comprises a PWM device for providing a plurality of POM signals; and a controller electrically connected to the PWM device and a plurality of driving circuits, for controlling PWM signals to arbitrarily enable or disable the plurality of driving circuits according to the load capacity. When one of the driving circuits is damaged, the control device disables the damaged driving circuit and replaces the damaged driving circuit with another driving circuit selected at random.

The present invention relates to a driving method for a PWM control device. The driving method comprises: determining a maximum number of the utilized driving circuits; determining a utilized number of the driving circuits according to the maximum number and a load current; and enabling or disabling a predetermined number of the driving circuits according to the utilized number.

From the aforementioned PWM control device and the driving method thereof, it can be understood that the total output phase number will be properly selected according to the load capacity, and the output phases will be selected at random so that the utilization rate of each driving circuit will approach to each other. Therefore, the utilization rate of the driving circuits will be equalized, and the service life of the driving circuits will also be prolonged.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 shows a structure of a conventional PWM control circuit.

FIG. 2 shows a structure of a PWM control device in accordance with an embodiment of the present invention.

FIG. 3 shows a structure of a PWM control device In accordance with another embodiment of the present invention.

FIG. 4 ls a flow chart of a driving method for a PWM control device in accordance with an embodiment of the present invention.

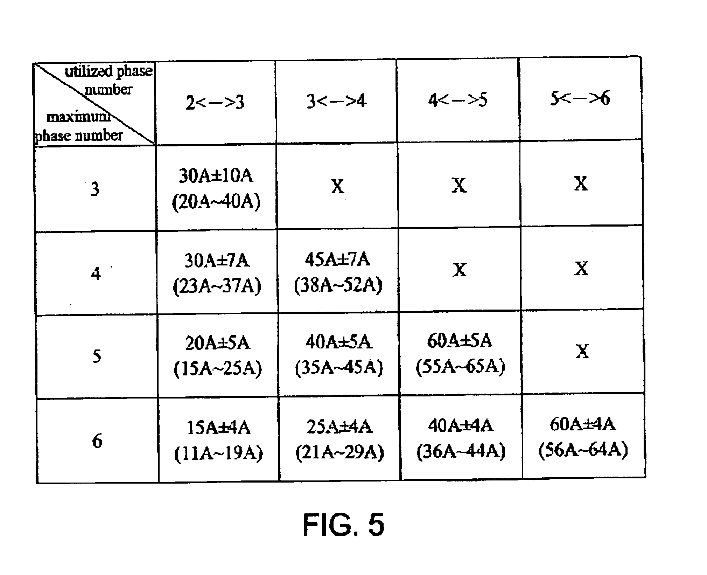

FIG. 5 shows the relationship between the PWM phase number and the load current.

### DETAILED DESCRIPTION

Reference will now be made to the drawings to describe exemplary embodiments of the present invention, in detail. The following description is given by way of example, and not limitation.

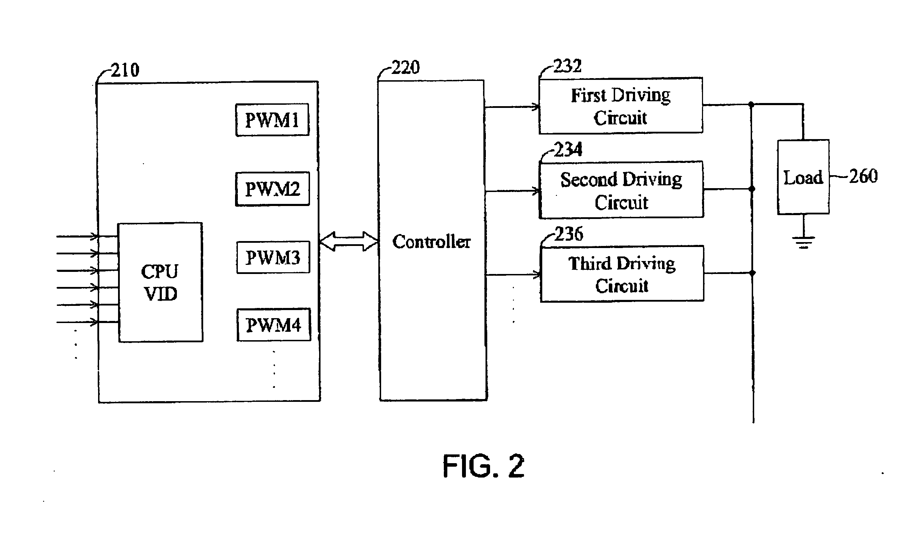

FIG. 2 shows a structure of a PWM control device in accordance with an embodiment of the present invention. The PWM control device comprises a PWM device 210 and a controller 220.

The PWM device 210 may be a chip, an Integrated circuit (IC) or a microprocessor for providing multi-phase PWM signals. The controller 220 is electrically connected to the PWM device 210 and a plurality of driving circuits for receiving PWM signals from the PWM device 210. After operating and processing the received PWM signals, the controller 220 respectively transmits the processed PWM signals to the first driving circuit 232, the second driving circuit 234 and the third driving circuit 236, etc. Thus, the control Intention of the present invention is achieved. The controller 220 may also be a chip, an integrated circuit or a microprocessor,

In this embodiment, the controller 220 can select the driving circuits at random, and can arbitrarily enable or disable the selected driving circuits. Assuming that the PWM control device shown in the FIG. 2 has six phases, when the load capacity is heavy so that four driving circuits need to be enabled to output current to the load 260, the P1NM device 210 will output the PWM signals of the phases 1 through 4 to the controller 220, and the controller 220 may arbitrarily enable the driving circuits corresponding to the phases 1 through 4 or phases 3 through 6 after operating and processing the received PWM signals. On the contrary, when the load capacity is light, the PWM device 210 will select two of the phases as the output phases according to the load current and a maximum phase number, I.e. 6. In other words, only two driving circuits will be enabled when the load capacity is light. At the same time, the controller 220 may arbitrarily enable the driving circuits corresponding to the phases 1 through 2 or phases 3 and 6. Although the controller 220 enables the driving circuits arbitrarily, the object of that is to enable all driving circuits equally, so that none of the driving circuits will always output current,

In addition, when one of the enabled driving circuits is damaged, the controller 220 will disable the damaged driving circuit and replace the damaged driving circuit with another driving circuit selected at random. Furthermore, when one of the enabled driving circuits is damaged, the controller 220 will not enable the damaged driving circuit again, For example, assuming that the driving circuits corresponding to the phases 1, 2 and 5 are enabled, the controller 220 will disable the driving circuit corresponding to the phase 5 when it is damaged, and the controller 220 may enable the driving circuit corresponding to the phase 6 or phase 3 to substitute for the damaged driving circuit.

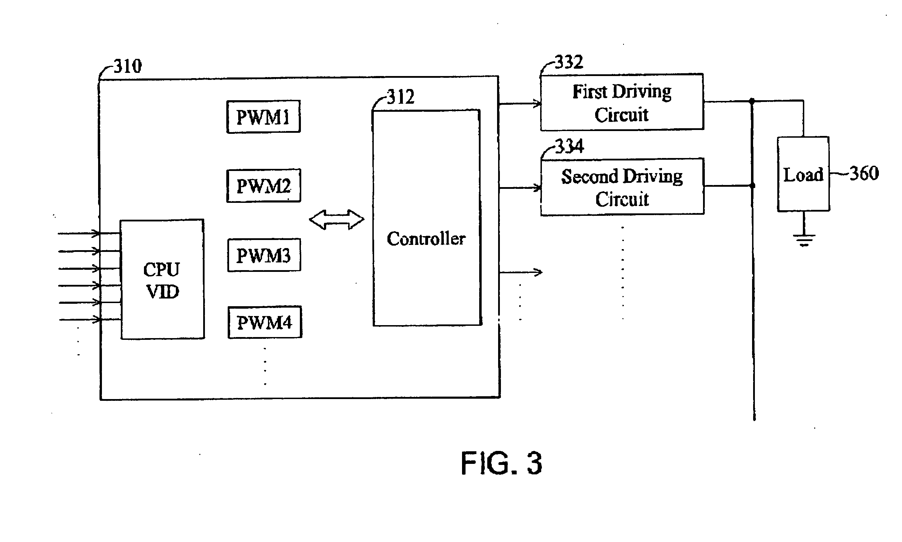

FIG. 3 shows a structure of a PWM control device in accordance with another embodiment of the present invention. In this embodiment, the controller 312 is integrated into the PWM device 310. The function and the operation of the PWM control device shown In the FIG. 3 are similar to that of the PWM control device shown in the FIG. 2. Therefore, no more description is needed.

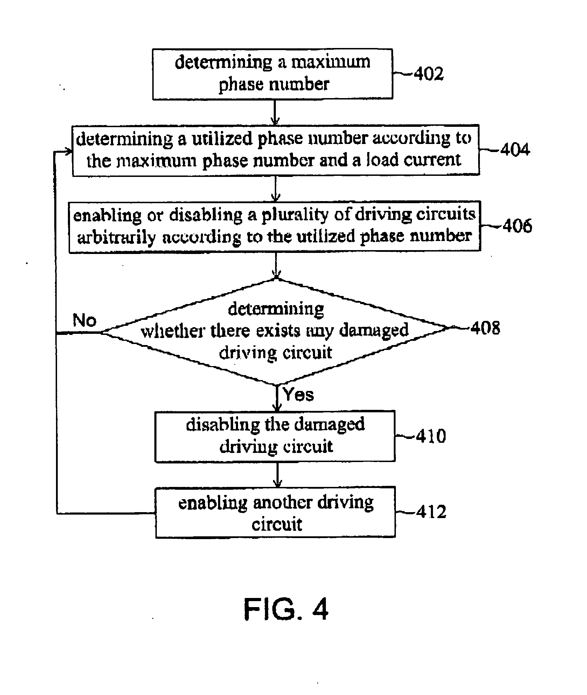

FIG. 4 is a flow chart of a driving method for a PWM control device in accordance with an embodiment of the present invention. In the step 402, a maximum phase number is determined. The user could select a PWM device according to real needs, so as to determine the maximum phase number. For example, the user could select a PWM chip having 6 phases or a PWM chip having 4 phases. The phase number of the selected PWM chip represents the maximum number which the driving circuits can be enabled by the selected PWM chip. In the step 404, a utilized phase number ls determined. The CPU will control the output phase number of the PWM device according to the load current. As shown in the table of the FIG, 5, assuming that the PWM control device has 6 phases, the output phase number will be changed from 6 to 6 or from 6 to 5 when the load current achieves 56-64A; the output phase number will be changed form 4 to 5 or from 5 to 4 when the load current is about 36-44A. Therefore, the number of the PWM signals transmitted to the controller and the number of the enabled driving circuits will be changed correspondingly. In the step 406, the driving circuits are enabled arbitrarily according to the utilized phase number, For example, when the utilized phase number is 4, the controller will receive the PWM signals of four phases. After operating and processing the received PWM signals, the controller will arbitrarily enable four driving circuits. Afterward, in the step 408, the controller detects the enabled driving circuits and determines whether there exists any damaged driving circuit. If the result is negative, the PWM control device returns to the step 404; if the result is positive, the PWM control device performs the steps 410 and 412. When one of the enabled driving circuits is damaged, the controller will disable the damaged driving circuit and replace the damaged driving circuit with another driving circuit selected at random, so as to keep the output power to enable the load works normally.

Variations and modifications are possible within the scope of the appended claims.

## Claims

1. A pulse width modulation (PWM) control device, comprising:
a PWM device, including a plurality of PWM outputs for providing a plurality of PWM signals, respectively, wherein a number of the plurality of PWM outputs determine a maximum output phase of the PWM device;
a plurality of driving circuits corresponding to the plurality of PWM outputs respectively; and
a controller (220), directly and electrically connected between the PWM device (210) and the plurality of driving circuits (233, 234, 236), and controlling the plurality of PWM signals to select the driving circuits at random and arbitrarily enable some of the driving circuits and disable remaining driving circuits of the plurality of driving circuits according to a change of a load capacity connected to the plurality of driving circuits, so that all driving circuits will be equally enabled and none of the driving circuits will always output current;
wherein, when one of the enabled driving circuits is damaged, the controller (220) disables the damaged driving circuit and replaces the damaged driving circuit by arbitrarily enabling one of the remaining driving circuits.

2. The PWM control device as claimed in claim 1, wherein the controller is integrated with the PWM device.

3. A driving method for a PWM control device, comprising:
determining a maximum phase number of a PWM device with a plurality of PWM outputs to provide a plurality of PWM signals, respectively;
determining a utilized phase number according to the maximum phase number and a load current;
providing a plurality of driving circuits (232, 234, 236) corresponding to the plurality of PWM outputs, respectively; selecting the driving circuits at random;
enabling some of the driving circuits arbitrarily and disabling remaining driving circuits of the plurality of driving circuit (232, 234, 236) according to the utilized phase number by the plurality of PWM signals which are controlled by a controller (220) directly and electrically connected between the PWM device and the plurality of driving circuits, so that all driving circuits will be equally enabled and none of the driving circuits will always output current; wherein when one of the enabled driving circuits is damaged, the controller (220) disables the damaged driving circuit and replaces the damaged driving circuit by arbitrarily enabling one of the remaining driving circuits.

4. The driving method as claimed in claim 3, further comprising:
determining whether there exists any damaged driving circuit;
disabling the damaged driving circuit; and
replacing the damaged driving circuit by arbitrarily enabling one of the disabled remaining driving circuits.

5. The driving method as claimed in claim 3, wherein the way of determining the utilized phase number comprises increasing or decreasing the utilized phase number according to a lookup table.

## Patentansprüche

1. Ein Pulsbreitenmodulations (Pulse Width Modulation/PWM)-Kontrollgerät, welches Folgendes umfasst:
eine PWM-Vorrichtung, die eine Vielzahl von PWM-Ausgängen zum Bereitstellen von jeweils einer Vielzahl von PWM-Signalen beinhaltet, wobei eine Anzahl der Vielzahl der PWM-Ausgänge eine Maximalleistungs-Phase der PWM-Vorrichtung bestimmt;
eine Vielzahl von Treiberschaltungen jeweils der Vielzahl der PWM-Ausgänge entsprechend , und
eine Steuerung, die direkt und elektrisch zwischen der PWM-Vorrichtung und der Vielzahl von Treiberschaltungen angeschlossen ist, und welche die Vielzahl von PWM-Signalen kontrolliert, um beliebig die Aktivierung einiger Treiberschaltungen zu ermöglichen und die restlichen Treiberschaltungen der Vielzahl der Treiberschaltungen entsprechend einer Veränderung einer Nutzlast, die mit der Vielzahl der Treiberschaltungen verbunden ist, zu deaktivieren;
wobei es bei einer Beschädigung einer der aktivierten Treiberschaltungen so ist, dass die Steuerung die beschädigte Treiberschaltung deaktiviert und die beschädigte Treiberschaltung durch willkürliches Aktivieren einer der verbleibenden Treiberschaltungen ersetzt

2. Das PWM-Kontrollgerät nach Anspruch 1, wobei die Steuerung in die PWM-Vorrichtung integriert ist.

3. Ansteuerverfahren für ein PWM-Kontrollgerät, welches Folgendes umfasst:
Bestimmen einer maximalen Phasenzahl einer PWM-Vorrichtung mit einer Vielzahl von PWM-Ausgängen, um jeweils eine Vielzahl von PWM-Signalen bereitzustellen;
Bestimmen einer verwendeten Phasenzahl gemäß der maximalen Phasenzahl und einem Laststrom;
Bereitstellen einer Vielzahl von Treiberschaltungen, die jeweils mit der Vielzahl von PWM-Ausgänge verbunden sind; und
zur willkürlichen Aktivierung einiger Treiberschaltungen und der Deaktivierung der verbliebenen Treiberschaltungen aus der Vielzahl von Treiberschaltungen gemäß der verwendeten Phasenzahl der Vielzahl der PWM-Signale, die durch eine Steuerung gesteuert wird, welche direkt und elektrisch zwischen der PWM-Vorrichtung und der Vielzahl der Treiberschaltungen angeschlossen ist.

4. Das Ansteuerverfahren nach Anspruch 3, welches ferner Folgendes umfasst:
Ermittlung, ob es eine irgendeine beschädigte Treiberschaltung gibt;
Deaktivieren der beschädigten Treiberschaltung, und
Austausch der beschädigten Treiberschaltung durch willkürliches Aktivieren einer der deaktivierten Treiberschaltungen.

5. Das Ansteuerverfahren nach Anspruch 3, wobei die Art und Weise des Bestimmens der verwendeten Phasenzahl das Erhöhen oder Verringern der verwendeten Phasenzahl gemäß einer Nachschlagetabelle beinhaltet.

## Revendications

1. Un dispositif de contrôle de la modulation d'impulsions en largeur (PWM), comportant:
un dispositif PWM, y compris une pluralité des sorties de PWM pour fournir une pluralité des signaux PWM, respectivement, où un nombre de la pluralité des sorties de PWM détermine une phase maximum de sortie du dispositif de PWM;
une pluralité des circuits de commande correspondant respectivement à la pluralité des sorties de PWM; et
un contrôleur, directement et électriquement connecté entre le dispositif de PWM et la pluralité des circuits de commande, et contrôle de la pluralité des signaux de PWM pour activer arbitrairement certains des circuits de commande et pour désactiver les circuits de commande restants de la pluralité des circuits de commande selon un changement d'une capacité de charge connecté à la pluralité des circuits de commande;
où, quand un des circuits de commande activé est endommagé, le contrôleur désactive le circuit de commande endommagé et remplace le circuit de commande endommagé en activant arbitrairement un des circuits de commande restant.

2. Le dispositif de contrôle de PWM selon la revendication 1, où le contrôleur est intégré avec le dispositif de PWM.

3. Une méthode de commande pour un dispositif de contrôle de PWM, comportant:
la détermination d'un nombre maximum de phase d'un dispositif de PWM avec une pluralité des sorties de PWM pour fournir, respectivement, une pluralité des signaux de PWM;
la détermination d'un nombre de phase utilisé selon le nombre maximum de phase et un courant de charge ;
la fourniture d'une pluralité des circuits de commande correspondant, respectivement, à la pluralité des sorties de PWM; et
l'activation arbitrairement des certains des circuits de commande et la désactivation des circuits de commande restants de la pluralité des circuits de commande, selon le nombre de phase utilisé par la pluralité des signaux de PWM qui sont commandés par un contrôleur directement et électriquement connecté entre le dispositif de PWM et la pluralité des circuits de commande.

4. La méthode de commande selon la revendication 3, comportant davantage:
la détermination si là existe n'importe quel circuit de commande endommagé;
la désactivation du circuit de commande endommagé; et
le remplacement du circuit de commande endommagé en activant arbitrairement un des circuits de commande désactivé et restant.

5. La méthode de commande selon la revendication 3, où la manière de déterminer le nombre de phase utilisé comporte l'augmentation ou la diminution du nombre de phase utilisé selon une table de recherche.
